# EUROPEAN PATENT SPECIFICATION

(11) **EP 0 646 075 B1**
(45) Date of publication and mention of the grant of the patent: **23.10.1996**
(21) Application number: 93913408.6
(22) Date of filing: 21.06.1993
(51) Int. Cl.: B60R 13/00

(54) **APPARATUS FOR RETRACTING A RETRACTABLE MASCOT**
VORRICHTUNG ZUM EINZIEHEN EINER EINZIEHBAREN KÜHLERFIGUR
APPARATUS DE RETRACTATION D'UN ENJOLIVEUR DE CAPOT

(30) Priority: 26.06.1992 GB 9213600
(43) Date of publication of application: 05.04.1995
(73) Proprietor: Rolls-Royce Motor Cars Limited, Crewe Cheshire CW1 3PL (GB)
(72) Inventor: BRANTE, Charlotte Simone, Little Orchard, Flax Bourton, Bristol BS19 3QF (GB)
(74) Representative: Downey, William Gerrard
(86) International application number: GB9301308
(87) International publication number: WO9400316

(56) References cited:
- EP-A- 0 279 059
- WO-A-91/05679
- DE-A- 2 800 130
- GB-A- 1 503 229
- GB-A- 2 224 471
- GB-A- 2 234 839

## Description

The present invention relates to apparatus for retracting a retractable automobile mascot.

One such automobile mascot is described in British Patent Specification GB-A-1,503,229. Although the arrangement operates satisfactorily, the mascot can be difficult to re-erect after it has been retracted.

According to the present invention, there is provided mascot retraction apparatus for retracting a retractable automobile mascot comprising a support for the retractable mascot, an electric motor, means for pivotally connecting the support to the electric motor whereby to enable the motor to drive the support between a first position in which the mascot is upright and a second position in which the mascot is retracted, means actuatable when the mascot is subjected to a force in its upright position above a predetermined level for completing the supply circuit to the motor and means for breaking that circuit when the mascot reaches the fully retracted position or the upright position.

In a preferred embodiment of the invention, the means for connecting the support to the motor comprises levers. Advantageously upper and lower levers are provided. The actuatable means for completing the supply circuit and the means for breaking the supply circuit comprise microswitches. The microswitch for completing the supply circuit is disposed for actuation by a rod connected to the mascot and spring loaded by a helical spring. When the mascot is tilted, the rod is moved against the force of the spring and actuates the microswitch. Two microswitches are provided for actuation by upper and lower levers respectively to break the circuit to the motor at the limits of travel of the mascot. Manually operable switch means are also provided for completing the circuit to the motor. The motor is disposed to drive the levers through a gearbox. . A microprocessor is provided for controlling operation of the motor in dependence upon the position of the mascot. A member, preferably a security plate, is provided for closing off an aperture through which the mascot is retracted after retraction. The plate is driven to and from its operative position by a cable and pulley arrangement. Guides are provided for the cable and also for the plate. The pulleys are spring loaded to apply tension to the cable.

In order that the invention may be more clearly understood, one embodiment thereof will now be described, by way of example, with reference to the accompanying drawings, in which:-
Figure 1 shows a front elevational view of a mascot retraction apparatus with the mascot in the upright position, and
Figure 2 shows a view of part of the apparatus of Figure 1 and illustrates the movement of that part between upright and retracted positions of the mascot.

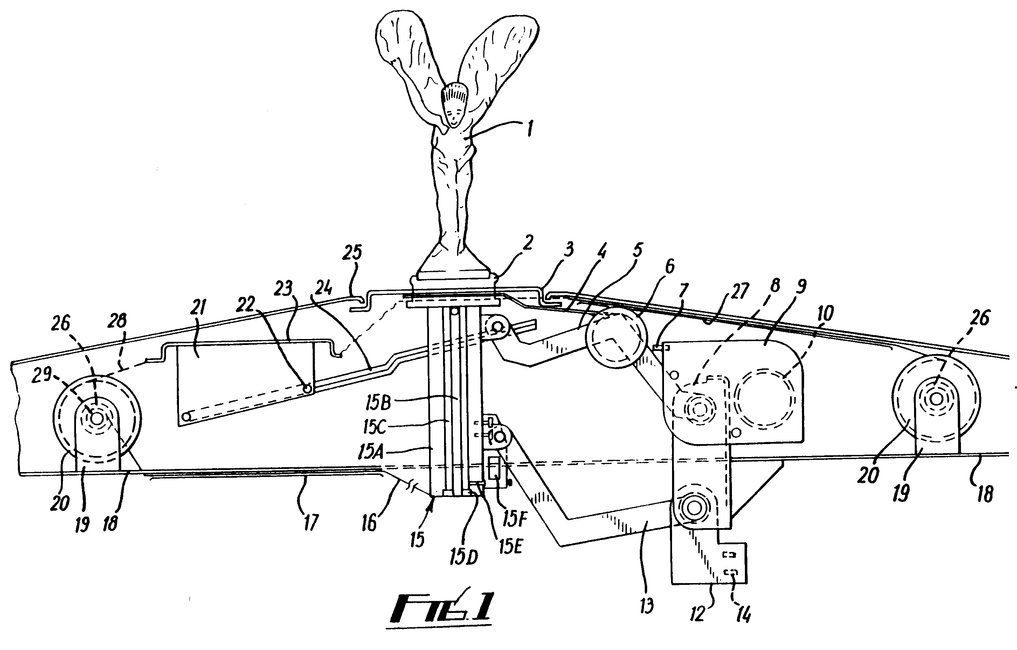

Referring to Figure 1, an automobile mascot 1 is mounted on a finisher 2 which in turn is mounted in a plinth 3. The plinth is disposed to close off an aperture in the radiator shell 25 of the automobile. The mascot and finisher are mounted on a spring container assembly 15. The assembly 15 comprises a housing 15A, a rod 15B pivotally connected to mascot base and a helical spring 15C constrained to act between the mascot base and a flange (nut) 15D on the rod. A further flange 15E on the rod is positioned adjacent a micro-switch 15F. The assembly 15 is pivotally connected via specially shaped upper and lower levers 5 and 13 to a bracket 8 connected to the bearing plate 18. A motor 10 and associated gearbox 9 are disposed adjacent the bracket 8 and are drivably connected to the pivot of the upper lever 5. A microswitch 7 is mounted adjacent the upper lever 5 when the lever 5 is in its uppermost position. A further microswitch 14 is mounted on a bracket 12, which depends from bracket 8, in a position adjacent the lowermost position of the lower lever 13. The actuation of the microswitches control the operation of the motor 10 and their operation will be described later. A plinth spring 4 and plinth spring retainer 6 are provided to maintain the plinth in position when the mascot 1 is upright. The retainer's 6 are connected to the upper lever 5. (one on either side of lever to retain spring).

A security plate arrangement is provided to close off the aperture through which the mascot is retracted after retraction. This arrangement comprises a security plate 23 which has a peripheral shape which is substantially the same as that of the plinth 3 which surrounds the mascot 1. This security plate is mounted on a runner plate 21 for movement on runners 22 in guide rails 24. A cable 28 is connected to the security plate 23 and disposed to run between pulleys 20 respectively rotationally mounted on pedestals 19 supported on the bearing plate 18. Guide 27 is provided to guide the cable 28 along its path. A further cable 16 is connected between the assembly 15 and a smaller diameter pulley 29 than pulley 26 mounted coaxially with the pulley 26 adjacent guide 17.

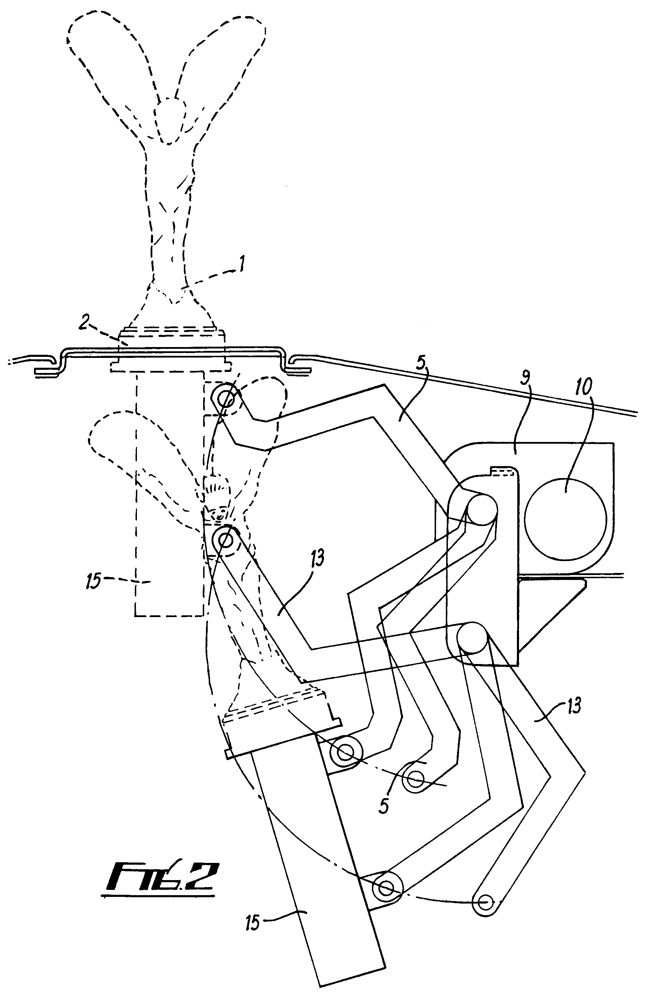

The operation of the above described arrangement is as follows. If the mascot 1 is subject to an impact, either accidentally or through an unauthorised attempt to remove it, the resultant movement of the mascot and rod 15B against the spring force of the spring 15C of assembly 15 actuates the microswitch 15F to switch on motor 10 to rotate the levers 5 and 13 through gearbox 9. The levers 5 and 13 assembly 15 and mascot 1 follow the path illustrated in Figure 2 downward movement being terminated by the actuation of microswitch 14 by lower lever 13 which results in motor 10 being switched off. During mascot 1 retraction, the security plate 23 remains in position shown in Figure 1 until cable 16 becomes taut. Cable 16 then pulls pulley 29 against the action of adjacent spring 26 which releases cable 28 from adjacent pulley 20. The spring 26 on the other pulley 20 is at the point under tension and the release of cable from the first mentioned pulley 20 enables the cable and the plate 23 to be pulled across until the plate is disposed to close off the aperture in the radiator shell 25. The mascot is then securely contained within the radiator shell. Provision is made for operating the motor from the automobile cabin. For this purpose a switch (not shown) is provided in the cabin and a microprocessor is provided enabling the position of the mascot to be determined. The switch may be operated to either retract the mascot or erect it from the retracted position. When the cabin switch is actuated the microprocessor remembers the position of the mascot. If the mascot is upright, then the retraction process described above follows. If the mascot is already retracted the motor operates to raise the mascot. On the first small movement of the mascot, cable 16 is released enabling adjacent pulley 26 to turn and pull back plate 23 through cable 28 opening the aperture in the radiator shell for the mascot to pass through. This movement of cable 28 retensions spring 26 on the pulley 20 adjacent the motor ready for the next retraction. When the mascot is driven by the motor from the retracted to the upright position the motor is switched off when the mascot reaches the upright position by microswitch 7 which is actuated by upper lever 5.

It will be appreciated that the above embodiment has been described by way of example only and that many variations are possible without departing from the scope of the invention. For example, although a single cable 28 is shown extending between pulleys 20, two cables extending to respective pulleys 20 on opposite sides respectively of the plate 23 could be provided instead. The cable or cables could be attached to the runners rather than the plate itself or to any other suitable points.

## Claims

1. Mascot retraction apparatus for retracting a retractable automobile mascot (1) comprising a support (3) for the retractable mascot, characterised by an electric motor (10), means (5,13) for pivotally connecting the support (3) to the electric motor (10) whereby to enable the motor (10) to drive the support (3) between a first position in which the mascot is upright and a second position in which the mascot is retracted, means actuatable (15F) when the mascot is subjected to a force in its upright position above a predetermined level for completing the supply circuit to the motor (10) and means for breaking that circuit when the mascot reaches the fully retracted position or the upright position.

2. Apparatus as claimed in claim 1, in which the means for connecting the support to the motors comprises levers (5 and 13).

3. Apparatus as claimed in claim 2, in which there are upper and lower levers (5 and 13).

4. Apparatus as claimed in any preceding claim, in which the actuable means for completing the supply circuit and the means for breaking the supply circuit comprises a switch (15F).

5. Apparatus as claimed in claim 4, in which the switch (15F) for completing the supply circuit is disposed for actuation by a rod (15B) connected to the mascot and resiliently loaded.

6. Apparatus as claimed in claim 5, in which a helical spring (15C) provides the resilient loading.

7. Apparatus as claimed in claim 4,5 or 6, when appendant directly or indirectly to claim 3, in which two switches (7 and 14) are provided for actuation by the upper and lower levers respectively to break the circuit to the motor (10) at the limits of travel of the mascot (1).

8. Apparatus as claimed in claim 4,5,6 or 7, in which the switches (7,14 and 15F) are micro-switches.

9. Apparatus as claimed in any preceding claim, in which manually operable switch means are provided for completing the circuit to the motor (10).

10. Apparatus as claimed in any of claims 4,5,6, and 7 when appendant directly or indirectly to claim 2 or 3, in which the motor (10) is disposed to drive the levers through a gearbox (9).

11. Apparatus as claimed in any preceding claim, in which a microprocessor is provided for controlling operation of the motor (10) in dependence upon the position of the mascot (1).

12. Apparatus as claimed in any preceding claim in which a member (23) is provided for closing off an aperture through which the mascot (1) is retracted after retraction.

13. Apparatus as claimed in claim 12, in which the member (23) is driven to and from its operative position by a cable and pulley arrangement (28, 20).

14. Apparatus as claimed in claim 13, in which guides (17, 27) are provided for the cable and the member (23) and the pulleys (20) are spring loaded (26) to apply tension to the cable.

## Patentansprüche

1. Vorrichtung zum Einziehen einer einziehbaren Automobil-Kühlerfigur (1) mit einem Träger (3) für die einziehbare Kühlerfigur,
gekennzeichnet durch einen Elektromotor (10) und Mittel (5, 13), die schwenkbar den Träger (3) mit dem Elektromotor (10) derart verbinden, daß der Motor (10) den Träger (3) zwischen einer ersten Stellung und einer zweiten Stellung antreiben kann, wobei die Kühlerfigur in der ersten Stellung aufrecht steht und in der zweiten Stellung eingezogen ist, und weiter gekennzeichnet durch Mittel, die betätigbar (15F) sind, wenn die in aufrechter Stellung befindliche Kühlerfigur einer Kraft ausgesetzt wird, die über einem vorbestimmten Wert liegt, wobei die Mittel den Stromkreis nach dem Motor (10) schließen, und wobei ferner Mittel vorgesehen sind, um jenen Stromkreis zu öffnen, wenn die Kühlerfigur die voll eingezogene Stellung oder die aufrechte Stellung erreicht hat.

2. Vorrichtung nach Anspruch 1, bei welcher die Mittel zur Verbindung des Trägers mit dem Motor aus Hebeln (5 und 13) bestehen.

3. Vorrichtung nach Anspruch 2, bei der obere und untere Hebel (5 und 13) vorgesehen sind.

4. Vorrichtung nach einem der vorhergehenden Ansprüche, bei der die betätigbaren Mittel zum Schließen des Stromkreises und die Mittel zum Öffnen des Stromkreises aus einem Schalter (15F) bestehen.

5. Vorrichtung nach Anspruch 4, bei der der Schalter (15F) zum Schließen des Stromkreises so angeordnet ist, daß er durch eine Stange (15B) betätigt wird, die mit der Kühlerfigur verbunden und elastisch vorgespannt ist.

6. Vorrichtung nach Anspruch 5, bei der eine Schraubenfeder (15C) die elastische Vorspannung bewirkt.

7. Vorrichtung nach einem der Ansprüche 4, 5 oder 6 bei direkter oder indirekter Abhängigkeit von Anspruch 3, bei welcher zwei Schalter (7 und 14) vorgesehen sind, die durch den oberen bzw. den unteren Hebel betätigbar sind, um den Stromkreis nach dem Motor (10) an dem Ende der Bewegungsbahn der Kühlerfigur (1) zu unterbrechen.

8. Vorrichtung nach den Ansprüchen 4, 5, 6 oder 7, bei der die Schalter (7, 14 und 15F) Mikroschalter sind.

9. Vorrichtung nach einem der vorhergehenden Ansprüche, bei welcher ein manuell betätigbarer Schalter vorgesehen ist, um den Stromkreis nach dem Motor (10) zu schließen.

10. Vorrichtung nach einem der Ansprüche 4, 5, 6 und 7 in direkter oder indirekter Abhängigkeit von Anspruch 2 oder 3, bei der der Motor (10) die Hebel über ein Getriebe (9) antreibt.

11. Vorrichtung nach einem der vorhergehenden Ansprüche, bei welcher ein Mikroprozessor vorgesehen ist, um die Arbeitsweise des Motors (10) in Abhängigkeit von der Lage der Kühlerfigur (1) zu steuern.

12. Vorrichtung nach einem der vorhergehenden Ansprüche, bei welcher ein Teil (23) vorgesehen ist, um eine Öffnung abzuschließen, durch die die Kühlerfigur (1) beim Einziehen hindurchtritt.

13. Vorrichtung nach Anspruch 12, bei welchem der Teil (23) in seine Arbeitsstellung und aus dieser heraus durch eine aus Kabel und Rollen bestehende Anordnung (28, 20) angetrieben wird.

14. Vorrichtung nach Anspruch 13, bei der Führungen (17, 27) für das Kabel und das Teil (23) vorgesehen sind, und bei der die Rollen (20) durch Feder (26) vorgespannt sind, um einen Zug auf das Kabel auszuüben.

## Revendications

1. Dispositif de rétraction d'une mascotte, conçu pour rétracter une mascotte automobile (1) rétractable comprenant un support (3) destiné à la mascotte rétractable, caractérisé par un moteur électrique (10), des moyens (5, 13) destinés à relier de façon pivotante le support (3) au moteur électrique (10), de manière à permettre au moteur (10) de déplacer le support (3) entre une première position, dans laquelle la mascotte est érigée, et une deuxième position, dans laquelle la mascotte est rétractée, un moyen (15F) actionnable lorsque la mascotte est soumise à une force, en position érigée, dépassant un niveau prédéterminé, pour fermer le circuit d'alimentation allant au moteur (10) et un moyen pour couper ce circuit lorsque la mascotte atteint la position totalement rétractée ou la position érigée.

2. Dispositif selon la revendication 1, dans lequel le moyen de liaison du support aux moteurs comprend des leviers (5 et 13).

3. Dispositif selon la revendication 2, dans lequel sont prévus des leviers supérieur et inférieur (5 et 13).

4. Dispositif selon l'une quelconque des revendications précédentes, dans lequel le moyen actionnable destiné à fermer le circuit d'alimentation et le moyen destiné à couper le circuit d'alimentation comprend un interrupteur (15F).

5. Dispositif selon la revendication 4, dans lequel l'interrupteur (15F) destiné à fermer le circuit d'alimentation est disposé pour être actionné par une tige (15B), connectée à la mascotte et chargée élastiquement.

6. Dispositif selon la revendication 5, dans lequel un ressort hélicoïdal (15C) fournit la charge élastique.

7. Dispositif selon la revendication 4, 5 ou 6 dépendant directement ou indirectement de la revendication 3, dans lequel deux interrupteurs (7 et 14) sont prévus pour être actionnés par les leviers supérieur et inférieur, respectivement afin de couper le circuit allant au moteur (10), lorsque sont atteintes les limites de déplacement de la mascotte (1).

8. Dispositif selon la revendication 4, 5, 6 ou 7, dans lequel les interrupteurs (7, 14 et 15F) sont des micro-interrupteurs.

9. Dispositif selon l'une quelconque des revendications précédentes, dans lequel des moyens interrupteurs actionnables manuellement sont prévus pour fermer le circuit allant au moteur (10).

10. Dispositif selon l'une quelconque des revendications 4, 5, 6 et 7, dépendant directement ou indirectement de la revendication 2 ou 3, dans lequel le moteur (10) est disposé pour commander les leviers par l'intermédiaire d'une boîte de vitesses (9).

11. Dispositif selon l'une quelconque des revendications précédentes, dans lequel un micro-processeur est prévu pour commander le fonctionnement du moteur (10) selon la position prise par la mascotte (1).

12. Dispositif selon l'une quelconque des revendications précédentes, dans lequel un organe (23) est prévu pour fermer une ouverture par laquelle la mascotte (1) est rétractée, une fois la rétraction faite.

13. Dispositif selon la revendication 12, dans lequel l'organe (23) est entraîné à et depuis sa position fonctionnelle par un dispositif à câble et à poulies (28, 20).

14. Dispositif selon la revendication 13, dans lequel des guides (17, 27) sont prévus pour le câble et l'organe (23), et les poulies (20) sont chargés par un ressort (25), afin d'appliquer une tension au câble.
